# EUROPEAN PATENT APPLICATION

(11) **EP 2 735 586 A1**
(43) Date of publication of application: **28.05.2014**
(21) Application number: 13193589.2
(22) Date of filing: 20.11.2013
(51) Int. Cl.: C08K 5/00, C09K 3/16

(54) **Composition**

(30) Priority: 22.11.2012 SE 1251319
(71) Applicant: Kvastad, Linda, 126 47 Hägersten (SE)
(72) Inventor: Kvastad, Linda, 126 47 Hägersten (SE)
(74) Representative: Brann AB

(57) **Abstract**

The invention relates to a composition for preventing static electricity on a cell material slide, wherein the surface of the slide is made of a non-conductive material, such as plastic and the use of such a composition in preventing static electricity which might occur in connection with cell material slides.

## Description

### FIELD OF INVENTION

The invention relates to a composition for preventing static electricity on a cell material slide, wherein the surface of the slide is made of a non-conductive material, such as plastic and the use of such a composition in preventing static electricity which might occur in connection with cell material slides.

### BACKGROUND OF THE INVENTION

Within the area of microscopy, such as in Laser Microdissection (LMD) microscopy, static electricity is a problem in connection with the cell material slides. This is due to that the slides that are utilised are often made of plastic and thus contains a non-conductive surface. Often large numbers of samples are destroyed and unusable due to problem with static electricity.

In Laser Microdissection wherein pieces of membranes of a cell material slide are cut with a laser, static electricity is formed on the non-conductive membrane while the laser is cutting the sample. This cause the sample to stick to the membrane, which result in that the sample cannot be collected and thus the sample will be discarded.

The problem with static electricity on the membrane increases when the humidity decreases. At higher humidity, the problem decrease, but at the same time the risk of damaging the sample increases. If for example, the sample has been contaminated with RNAse or has RNAse naturally in the cells, the RNAses can be activated with increased humidity and the RNA degraded. Thus it is desirable to have a relative humidity about 20 % during LMD to preserve the integrity of DNA as well as RNA in the sample, which in many cases are the components within the cell to be analysed.

Today, the above mentioned problem is solved in different ways. One example being a method in which a pistol-like instrument is used which "pushes" away the static charge. However, that method demands that the user shoot with the pistol-like instrument after every cut with the LMD to be able to remove the static electricity at every moment the cutting has occurred. This is very time consuming, especially if a large amount of samples are to be treated.

Katoh et al., 1979 as well as Huber et al., 1968 have been focusing on the problem with static electricity and come up with different solutions how to solve that. However, none of them are faced with the problem or preservation of the DNA or RNA, which is logical since that kind of questions were not to be solved during that time period.

Another way of trying to eliminate and remove the problem with static electricity is to wear specific gloves, lab coats as well as shoes. However, this does not eliminate the production of static electricity which is produced when the cutting of the sample occurs.

There have also been attempts to utilize heated water beakers which are placed close to the microscope to eliminate static electricity. However, that causes instead the damage of the DNA or RNA in the sample.

Thus there is a need to find a solution which could remove the problem with static electricity within the field of microscopy where samples are to be treated prior to microscopy in a way that prevent buildup of static electricity such as in LMD, wherein the analysis will be performed at the level of RNA, DNA or protein or at several levels, i.e., other demands when the RNA or DNA will be analysed, due to the sensitivity against RNAse and DNAse which as soon the humidity is to high could degrade the DNA and RNA and thus make the sample unusable.

Finally, an expert within the field of SEM is not the same as an expert within the field of Laser Capture Microdissection (LMD). The SEM technology is used as a tool to gain information about the sample's surface topology and composition. Whereas LMD technology is used as a tool to isolate a part of a sample that will later undergo further molecular analyses, such as genome sequencing. The main differences between the two different fields, SEM and LMD, are that they use two different methods from which different information is gained. Also that LMD does not damage the cell material of a sample, such as DNA, RNA and proteins. Therefore an expert within the field of SEM is not the same as an expert within the field of LMD and thus an LMD expert do not have the same knowledge as a SEM expert.

### SUMMARY OF THE INVENTION

The invention relates to the static electricity problem as well as the problem that DNA and RNA often in many methods easy could be degrade prior to being analysed. Static electricity, which is formed upon cutting samples with for example a laser during microscopy, such as when using the LMD technology, wherein pieces of membranes are cut during microscopy. The DNA and RNA is often degraded due to that a high humidity is present and thus the DNAse and RNAse is activiated and degrade the DNA and the RNA. The problems have been solved by using a cationic surfactant to treat the cell material slide. Thereby the static electricity will not be formed when pieces are cut from a sample and no samples will be discarded due to the static electricity problem as well as DNA and RNA will not be degraded since the invented product prevents that it occurs. The static electricity if formed due to that the surface of the slide is made of a non-conductive material such as different plastic material. DNA and RNA is mostly degraded due to that there is a high humidity that activates the RNAse and DNAse.

In a first aspect the invention relates to the use of a composition for preventing static electricity comprising 0.001-25 (w/w) % of a cationic surfactant and thereby removing the above mentioned problem. For example, the composition prevents buildup of static electricity on a non-conductive surface such as plastic material as well as secures that essentially all the DNA and RNA remains intact and thus could be analysed and studied. One example, are consumables used in a laboratory where cell material is handled.

In a second aspect the invention relates to a composition for prevention of static electricity comprising from 0.001 to 0.05 % (w/w) of a cationic surfactant.

In a third aspect the invention relates to a method of preventing static electricity comprising the steps of providing a cell material slide, wherein said slide surface comprises a non-conductive material, exposing said cell material slide to a composition for prevention of static electricity comprising from 0.001 to 0.05 % (w/w) of a cationic surfactant and removing static electricity.

The invented use, composition and method can continuously protect an area against static electricity, such as static electricity exactly where the laser cuts out samples in LMD and thereby enabling a significant increase in the quantity of collected samples, at a relative humidity, which does not affect the integrity of DNA and RNA in the sample. It is a simple and easy method, which do not damages the sample or disturbs the work flow during the cutting.

### DETAILED DECSRIPTION OF THE INVENTION

In the context of the present application and invention the following definitions apply:
The term "cell material slide" is intended to mean: A slide which at least comprises a non-conductive surface, which may be of a plastic material which is able to build up static electricity and is used during LMD and on which the sample is placed. The sample could consist of cell material such as tissue, plant cells, cell smear, hair, bone and sperm. The cell material could be from both prokaryotic and eukaryotic cells, containing proteins, DNA and RNA.

The term "cationic surfactant" is intended to mean a cationic softening agent that is typically a quaternary ammonium compound, also referred to as an "esterquat", in particular one having two C₁₂₋₂₈ groups connected to the nitrogen head group that may independently be alkyl, hydroxyalkyl or alkenyl groups, preferably being connected to the nitrogen head group by at least one ester link, and more preferably by two ester links. The average chain length of the alkyl, hydroxyalkyl and/or alkenyl groups is preferably at least C₁₄ and more preferably at least C₁₆. It is particularly preferred that at least half of the groups have a chain length of C₁₈. In general, the alkyl, hydroxyalkyl and/or alkenyl groups are predominantly linear. The cationic surfactant generally has an anionic counter-ion, such as phosphate and/or a halide and/or alkyl sulphate, e.g. chloride or methylsulphate.

The invention relates to a composition to be used to eliminate or preventing static electricity comprising 0.001-25 (w/w) % of a cationic surfactant, such as 5-15 %. Areas in which the composition could be used includes all areas in which there is a need of preventing or eliminating static electricity on non-conductive surfaces, such as container made of non-conductive material or cell material slides. Example of container includes eppendorf tubes or microcentrifuge tubes. Example of cell material slides includes membrane slides made of PET (polyethylene terephthalate), PEN (polyethylene naphthalate) or PPS (polyphenylene sulfide).

Example of cationic surfactants that could be used includes cationic surfactants derived from esteramines, sugar derivatives, betaine esters and/or choline. Esteramines made through e.g. esterification of fatty acids and alkanolamines such as dimethyl ethanolamine, methyl ethanolamine, tri-ethanolamine, 3-(dimethyl amino)-1,2-propenediol, amionethylethanolamine and 1-(2 hydroxyethyl piperazine). Sugar derivatives made through e.g. esterification of fatty acids and glycosyl groups such as glucose, sorbitole or gluconic acid. Betaine esters made through e.g. esterification of fatty acids and aminocarboxylic acids. Choline esters made through e.g. esterification of fatty acids and choline. The cationic surfactant may be a tri-ethanolamine (TEA) based esterquat. The composition may also include one or more of a hygroscopic salt, alcohol based solvent and a preservative. A salt comprising 0,001-0,1 (w/w) % which has hygroscopic properties may be included such as calcium chloride, zinc chloride, magnesium chloride, sodium hydroxide, potassium hydroxide, potassium carbonate, potassium phosphate, carnallite and ferric ammonium citrate. The hydroscopic properties will probably aid TEA-esterquats to distribute the charge on the surface and could thus in certain embodiments be included for that particular purpose. An alcohol based solvent such as isopropyl alcohol, ethanol, and methanol. A preservative such as potassium sorbate could thus be included to prevent contamination of microorganisms. The composition may be diluted in a water based solution or buffer such as phosphate buffer saline (PBS) to a concentration of from 0.001 to 0.05 %, such as 0.001 to 0.03, 0.01-0.05 or 0.01 to 0.03 % of the TEA based esterquat. Preferably, the composition is diluted in PBS.

The invention also relates to a composition for prevention of static electricity comprising from 0.001 to 0.05 (w/w) % of a cationic surfactant, such as 0.001 to 0.03, 0.01-0.5 or 0.01-0.03 %. Such a composition could be used as such in all kind of applications in a laboratory wherein static electricity will be prevented or removed wherein the application concerns the handling of different samples including tissue wherein there is a problem with the static electricity. Examples of cationic surfactants being defined above as well as examples are shown above. Example of cationic surfactants that could be used includes those defined above and could be dissolved in an alcohol such as isopropanol or ethanol. The cationic surfactant may be a tri-ethanolamine (TEA) based esterquat. The composition may also include one or more of 0,001-0,1 (w/w) % calcium chloride, isopropyl alcohol and potassium sorbate.

Finally, the invention relates to a method of preventing static electricity comprising the steps of providing a cell material slide, wherein said slide is made of a non-conductive surface and exposed by dipping, dripping or spraying the slide with the composition comprising from 0.01 to 0.03 (w/w) % of a cationic surfactant and removing static electricity.

The invented use, composition and method could be used in for example human and veterinary medicine in following areas such as; DNA/RNA research, such as cancer and neurological research, Clinical pathology, such as tumor diagnosis and forensic analysis of single sperm or hair follicle.

Following examples are intended to illustrate, but not to limit, the invention in any manner, shape, or form, either explicitly or implicitly.

### EXAMPLES

The composition-L in the following examples consists of a liquid solution comprising 5-15 (w/w) % cationic surfactant TEA, 0,001-0,1 (w/w) % calcium chloride, 1-5 (w/w) % isopropyl alcohol, 0-5 (w/w) % potassium sorbate and water.

### EXAMPLE 1

Composition-L has been tested on several occasions, at different air humidities. At lower humidities there is a bigger problem with static electricity. To test composition-L two cell material slides were prepared with tissue samples of the same thickness. One slide was dipped in PBS, and then allowed to dry for 10 minutes before the LMD was performed. The second slide was dipped in PBS buffer with 0.2% of composition-L, and then allowed to dry for 10 minutes before LMD was performed.

At a relative humidity of about 10%, temperature 22 ⁰ C and tissue thickness of 8µm on a PPS membrane. Without the composition-L only 29.2% of the samples were collected. With the composition-L 56.3% of the samples were collected. The experiment showed that at very low humidity treatment with composition-L makes a big difference, but it is still difficult to collect samples. In this experiment, composition-L increased sample collection with 92.8%. Statistical analysis using the Fisher's exact test showed a significant increase in sample collection with a p-value of 0.0128.

### EXAMPLE 2

At a relative humidity of about 26%, temperature 22 ⁰ C and tissue thickness of 40µm on a PEN membrane. Samples were first collected without treatment with composition-L. The slide was then removed from the microscope holder and dipped in PBS buffer with 0.2% composition-L and then allowed to dry for 10 minutes before collection of samples started. Without composition-L only 50% of samples were collected. With treatment with composition-L 91.7% of the samples were collected. The experiment showed that at low humidity treatment with composition-L makes a big difference, and there is no difficulty to collect samples. In this experiment, treatment of slide with composition-L increased sample collection with 83.4%.

### EXAMPLE 3

To know if the RNA integrity of the sample is preserved after treatment with PBS buffer with 0.2% composition-L, samples were collected that had been treated and cut out with composition-L and samples which had not been treated with composition-L. Tissue sample of 8µm thickness was cut out, in the form of a box 300x300µm. RNA was purified with the RNeasy Mini Kit (Qiagen) and cDNA was made using iScript kit (Bio Rad). Then quantitative PCR (polymerase chain reaction) was conducted on GAPDH (glyseraldehyd 3-phosphate dehydrogenase), a housekeeping gene for an enzyme of glycolysis. It was assumed that all cells in the sample expressed GAPDH in equal concentrations. The untreated sample had a Cq value of 22.22 and the treated sample a Cq value of 22.51. Cq value is defined as the PCR cycle the fluorescence signal goes above the threshold baseline, which means a lower Cq value indicates a higher content of starting material in the sample. The small difference in Cq value between non-treated and treated samples were considered sufficiently small to be due to a difference in the number of cells included in this analysis. There was no difference in the amplification and melting curve between the samples. The experiment shows that the sample DNA and RNA integrity is preserved after treatment with composition-L.

### EXAMPLE 4

To further investigate the RNA integrity of the sample after treatment with PBS buffer with 0.2% of composition-L, four samples were collected that had been treated and cut out with composition-L and four samples which had not been treated with composition-L. All eight samples were collected from the same tissue piece, which was embedded in OCT and sections were cut in a cryostat before LMD. RNA was purified with the RNeasy Mini Kit (Qiagen) and analysed on a Bioanalyzer (Agilent) using a RNA Pico kit. The averge RIN value for samples treated with composition-L was 6.55 and the average RIN value for samples not treated with composition-L was 6.60. Thus, composition-L does not effect the RNA integrity of a sample.

### EXAMPLE 5

To further investigate the RNA integrity of the sample after treatment with PBS buffer with 0.2% composition-L, three samples were collected that had been treated with composition-L and three samples which had not been treated with composition-L. Sample in this experiment consisted of live cells from a human carcinoma celline. The cells were washed in composition-L or washed in PBS, no LMD was performed. Then the cells were pelleted and composition-L and PBS removed. The cells were then lysed and stored at -80C for further analysis. RNA was purified with the RNeasy Mini Kit (Qiagen) and analysed on a Bioanalyzer (Agilent) using a RNA Nano kit. The averge RIN value for samples treated with composition-L was 9.90 and the average RIN value for samples not treated with composition-L was 9.87. Thus, composition-L does not effect the RNA integrity of a sample.

### EXAMPLE 6

To investigate the DNA integrity of the sample after treatment with PBS buffer with 0.2% composition-L, three samples were collected that had been treated with composition-L and three samples which had not been treated with composition-L. Sample in this experiment consisted of live cells from a human carcinoma celline. The cells were washed in composition-L or washed in PBS, no LMD was performed. Then the cells were pelleted and composition-L and PBS removed. The cells were then lysed and stored at -80C for further analysis. DNA was purified with the AllPrep DNA/RNA Mini Kit (Qiagen) and analysed on an agarose gel. No DNA degradation was observed in samples treated with compostion-L or in samples not treated with compostion-L. Thus, composition-L does not effect the DNA integrety of a sample.

## Claims

1. Use of a composition comprising 0.001-25 (w/w) % of a cationic surfactant for preventing static electricity on a cell material slide, wherein said slide surface is made of a non-conductive material.

2. The use of a composition according to claim 1, comprising 5-15 (w/w) % of a cationic surfactant.

3. The use of a composition according to claims 1-2, wherein the cationic surfactant is Tri-ethanolamine (TEA) based esterquat.

4. The use of a composition according to claim 3, wherein said cell material slide is used in a microscopy technique such as Laser Microdissection technology.

5. The use of a composition according to any of claims 1-4, wherein the cell material is selected from the group consisting of tissue, plant cells, cell smear, hair, bone and sperm.

6. A composition for prevention of static electricity comprising from 0.001 to 0.05 % (w/w) of a cationic surfactant,, wherein the cationic surfactant is selected from the group consisting of dimethyl ethanolamine, methyl ethanolamine, tri-ethanolamine, 3-(dimethyl amino)-1,2-propenediol, amionethylethanolamine and 1-(2 hydroxyethyl piperazine).

7. The composition according to any of claims 6, wherein said composition comprises at least one ingredients selected from the group consisting of salt, such as calcium chloride, zinc chloride, magnesium chloride, sodium hydroxide, potassium hydroxide, potassium carbonate, potassium phosphate, carnallite and ferric ammonium citrate, an alcohol such as isopropylalcohol or ethanol or a preservative such as potassium sorbate.

8. The composition according to any of claims 6-7, wherein said composition comprises calcium chloride.

9. A method of preventing static electricity comprising the steps of
a. Providing a cell material slide, wherein said slide surface comprises a non-conductive material
b. Exposing said cell material slide to the composition according to any of claims 6-8 and preventing static electricity.
